# EUROPÄISCHE PATENTANMELDUNG

(11) **EP 1 652 506 A1**
(43) Veröffentlichungstag der Anmeldung: **03.05.2006**
(21) Anmeldenummer: 05019750.8
(22) Anmeldetag: 12.09.2005
(51) Int. Cl.: A61J 11/00, A01K 9/00

(54) **Nuckel zum Entnehmen von flüssigern Nahrungsmittel für Tiere, insbesondere für Kälber**

(30) Priorität: 08.10.2004 DE 102004049422
(71) Anmelder: Förster, Martin, 78234 Engen (DE)
(72) Erfinder: Förster, Martin, 78234 Engen (DE)
(74) Vertreter: Weiss, Peter

(57) **Zusammenfassung**

Bei einem Nuckel zum Entnehmen von flüssigem Nahrungsmittel für Tiere, insbesondere Kälber aus einem elastischen und hohl ausgebildeten länglichen Nuckelkörper (1) mit einer Einlassöffnung (2) und einer Entnahmeöffnung (4), soll ein innerer Querschnitt des Nuckelkörpers (1) vieleckartig, trapezartig, sechseckartig oder oval ausgebildet sein.

## Beschreibung

Die Erfindung betrifft einen Nuckel zum Entnehmen von flüssigem Nahrungsmittel für Tiere, insbesondere Kälber aus einem elastischen und hohl ausgebildeten länglichen Nuckelkörper mit einer Einlassöffnung und einer Entnahmeöffnung.

Herkömmliche Nuckel zum Entnehmen von flüssigem Nahrungsmittel für Tiere sind in vielfältigster Form und Ausführung im Markt bekannt und erhältlich.

Diese sind aus elastischem Material gebildet, sind zumeist zylinderartig ausgeformt und unterliegen einem starken Verschleiss durch häufiges Zusammendrücken des Nuckels beim Saugen der Tiere.

Sind beispielsweise die Nuckelkörper querschnittlich zylindrisch ausgebildet, so unterliegen insbesondere die Randbereiche bzw. die Seitenwandbereiche einem sehr hohen Verschleiss, es bilden sich Längsrisse, die Nuckel müssen oft ausgetauscht werden, was kosten- und wartungsintensiv ist.

Zudem reissen häufig Aufnahmebereiche der Nuckel, verursacht der Tiere beim Saugen, ein und beschädigen die Aufnahmebereiche der Nuckel im Bereich der Halterung, was ebenfalls unerwünscht ist.

Zudem sind herkömmliche Nuckel, bedingt durch ihre zylindrische Form nicht immer zur Tierfütterung geeignet, da häufig durch Zusammendrücken des Nuckels eine starke Querschnittsverengung resultiert, was ein Entnehmen von Nahrungsmittel für Tiere verhindert bzw. ein Durchfluss des Nahrungsmittels durch den Nuckel erhebliche beeinträchtigt bzw. vermindert. Die Nahrungsaufnahme für Tiere, insbesondere für Jungtiere und Kälber ist dadurch erschwert.

Der vorliegenden Erfindung liegt daher die Aufgabe zugrunde, einen Nuckel der eingangs genannten Art zu schaffen, welcher die genannten Nachteile beseitigt und mit welchem auf einfache und kostengünstige Weise die Standzeit eines Nuckels erheblich erhöht wird, dieser nicht beschädigt wird und Tiere schneller und grössere Mengen Nahrungsmittel ohne Beeinträchtigungen zu sich nehmen können.

Zur Lösung dieser Aufgabe führen die Merkmale des Patentanspruches 1 sowie die der nebengeordneten Patentansprüche 2 und 3.

Bei der vorliegenden Erfindung hat sich als besonders vorteilhaft erwiesen, den inneren Querschnitt des Nuckels bzw. des Nuckelkörpers als sechseckartigen Innenquerschnitt auszubilden, dessen Randbereiche vorzugsweise mit Radien versehen ist.

Sechseckartig bzw. trapezartig bis hin zu einer ovalen Form gewährleistet, dass insbesondere die Seitenwände oder Bereiche der Seitenwände beim Zusammendrücken des Nuckels einer geringeren Dehnung unterliegen und daher der Nuckel, insbesondere die Seitenwände einem geringeren Verschleiss unterliegen.

Zudem hat sich als vorteilhaft erwiesen, sollten die Bereiche der Seitenwände verstärkt bzw. ggf. dicker als die verbleibenden oberen oder unteren Wände ausgebildet sein, dass ein Zusammendrücken des Nuckels aufgrund dieser querschnittlichen Geometrie erschwert ist und der Nuckel innen beim Saugen nicht mehr vollständig zusammengedrückt wird, so dass das Tier permanent Nahrungsmittel aufnehmen kann und ein Durchfluss permanent gewährleistet ist.

In manchen Fällen hat sich als besonders vorteilhaft erwiesen, innerhalb des Nuckels bzw. im Bereich der Innenwände des Nuckels zusätzliche Abstandhalter zu integrieren bzw. aus dem Nuckelkörper selbst zu bilden, so dass bei Zusammendrücken des Nuckels noch entsprechende Durchflussmöglichkeiten für das flüssige Nahrungsmittel gebildet sind. Dies soll ebenfalls im Rahmen der vorliegenden Erfindung liegen. Dabei können die Abstandhalter stegartig oder zapfenartig, vorzugsweise der gegenüberliegenden Wand ausgerichtet innen vorgesehen sein. Die stegartigen Abstandhalter sind vorzugsweise in Längsrichtung nahezu über die vollständige Länge des Nuckelkörpers eingesetzt bzw. aus dem Nuckelkörper selbst gebildet. Diese ragen innen von der oberen Wand gegen die untere Wand bzw. von der unteren Wand gegen die obere Wand und verhindern auf diese Weise ein vollständiges Zusammendrücken des Nuckels bzw. des Nuckelkörpers zusätzlich.

Ferner ist von Vorteil bei der vorliegenden Erfindung, dass ein Knickbereich durch Verstärkungen im Bereich der Aufnahme für den Nuckel, insbesondere im Bereich des Einlasses des Nuckels verstärkt ausgebildet sind, so dass sich der Knickbereich, betrachtet von der Aufnahme bzw. von der Einlassöffnung verschieben lässt in das erste Drittel und das erste Viertel des Nuckels.

Der Knickbereich wird somit von der Aufnahme, bezogen auf die Gesamtlänge des Nuckels auf ein Viertel-bis ein Drittel verlagert, so dass auch hier das Abknicken und Einknicken des Nuckels nicht mehr nahe im Bereich der Aufnahme, sondern etwas entfernt davon erfolgt und somit den Nuckel schont. Hierdurch wird der Knickebereich nach vorne gegen die Entnahmeöffnung verlagert und verteilt ein Knicken auf eine grössere Knickfläche, was der Langlebigkeit des Nuckels ebenfalls dient.

Weitere Vorteile, Merkmale und Einzelheiten der Erfindung ergeben sich aus der nachfolgenden Beschreibung bevorzugter Ausführungsbeispiele sowie anhand der Zeichnung, diese zeigt in
Figur 1.1 eine schematisch dargestellte Seitenansicht auf einen erfindungsgemässen Nuckel R zum Entnehmen von flüssigem Nahrungsmittel für Tiere;
Figur 1.2 eine entsprechende Rückansicht auf den Nuckel gemäss Figur 1.1;
Figuren 2 und 3 einen schematisch dargestellten Querschnitt durch den Nuckel, entlang Linie II-II aus Figur 1.1 ohne Abstandhalter;
Figuren 5 und 6 schematisch dargestellte Querschnitte durch den Nuckelkörper gemäss Figur 1.1 entlang Linie II-II mit unterschiedliche vorgesehenen Abstandhaltern;
Figur 6 einen schematisch dargestellten Querschnitt durch ein weiteres Ausführungsbeispiels eines Nuckels, insbesondere Nuckelkörpers mit ovalem Innen- und Aussenquerschnitt.

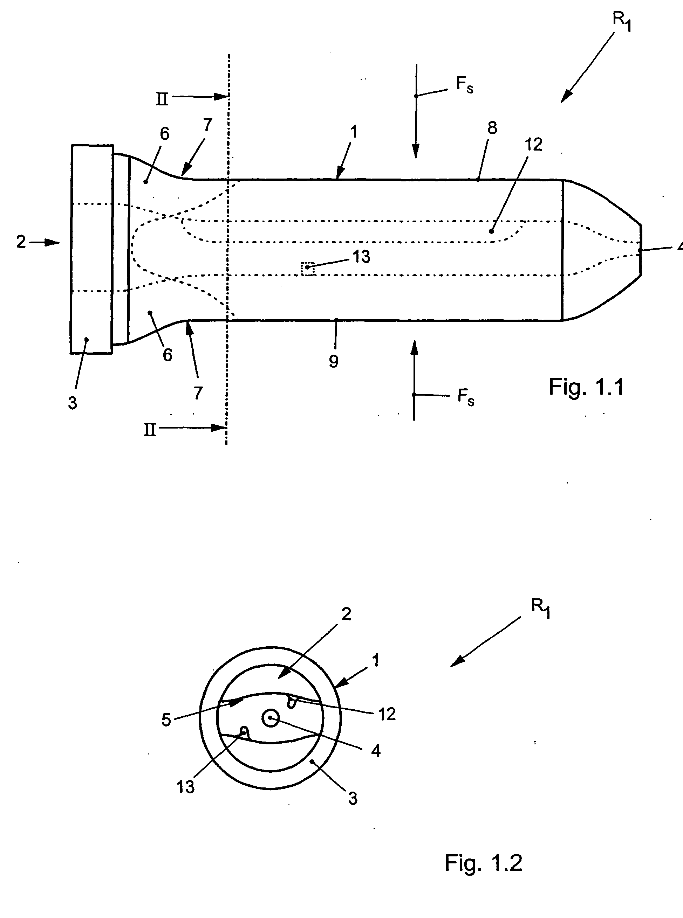

Gemäss Figur 1.1 weist ein erfindungsgemässer Nuckel R₁ zum Entnehmen von flüssigem Nahrungsmittel für Tiere, vorzugsweise für Kälber einen Nuckelkörper 1 auf, welcher länglich und im Inneren hohl ausgebildet ist. Der Nuckelkörper 1 ist vorzugsweise aus einem elastisch verformbaren Material, Kunststoff, Latexgemisch etc. hergestellt.

Dabei weist dieser eine Einlassöffnung 2 für flüssiges Nahrungsmittel einends im Bereich einer Aufnahme 3 auf, die vorzugsweise flanschartig und kreisringförmig ausgebildet ist.

Andernends der Aufnahme 3 ist endseits eine Entnahmeöffnung 4 geringeren Durchmessers gebildet.

Im Inneren ist der Nuckel R₁ hohl ausgebildet, wobei durch diesen das flüssige Nahrungsmittel von Tieren zur Ernährung und Fütterung angesaugt wird.

Eine entsprechende Rückansicht in dem Bereich der Einlassöffnung 2 zeigt Figur 1.2, wobei eine vorzugsweise kreisartige Einlassöffnung 2 sich reduziert auf einen inneren Querschnitt 5, welcher vieleckartig, insbesondere sechseckartig, ggf. leicht trapezförmig oder trapezartig ausgebildet ist.

Im Bereich der Reduktion des Querschnitts von runder Einlassöffnung zum inneren Querschnitt 5 oval oder sechseckartigist ein verstärkter Bereich 6 gebildet, so dass etwa im ersten Viertel bis im ersten Drittel, ausgehend von der Einlassöffnung 2 der Nuckelkörper 1 verstärkt ist und ein Knickbereich 7 sich zur Einlassöffnung 2 bzw. Aufnahme 3, bezogen auf die Gesamtlänge des Nuckels R₁ auf etwa ein Viertel bis ein Drittel einstellt bzw. zur Aufnahme 3 beabstandet.

Hierdurch wird gewährleistet, dass der Nuckel nicht im Bereich der Aufnahme 3, beispielsweise beim Abknicken, verursacht durch das Kalb beim Saufen, einreisst oder beschädigt wird.

Hierdurch können Beschädigungen im Bereich der Einlassöffnung 2 bzw. Aufnahme 3 vermieden werden.

Wie ferner in Figur 1.1 angedeutet ist, greifen entsprechende Saugkräfte Fₛ in dargestellter Weise auf die Oberfläche des Nuckelkörpers 1 an, in dem beispielsweise vom Tier eine obere Wand 8 bzw. eine untere Wand 9 beim Saugen zusammengedrückt werden.

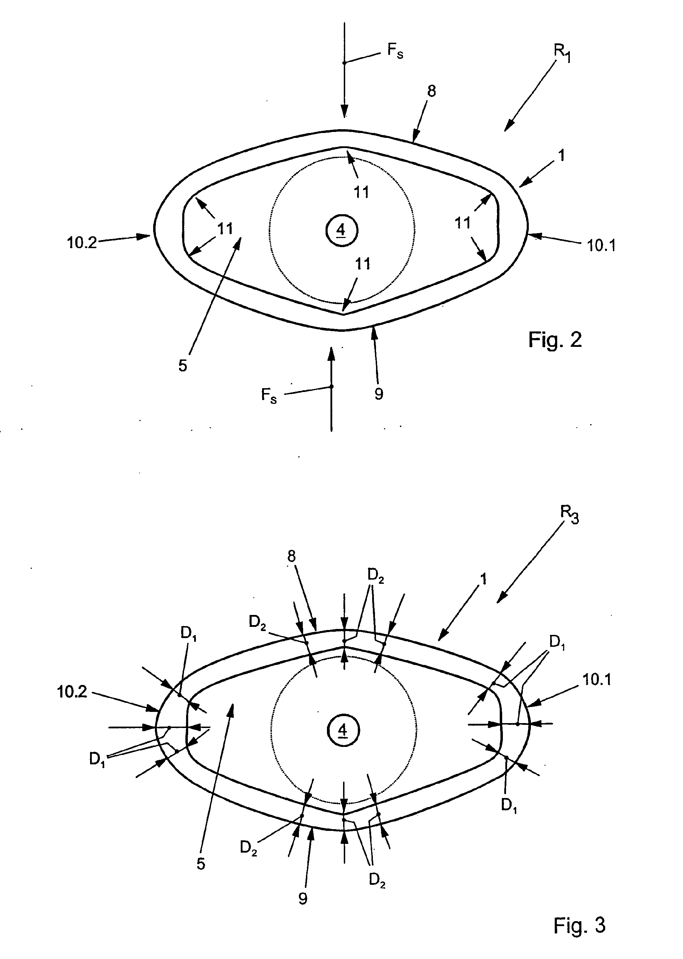

In dem Ausführungsbeispiel der vorliegenden Erfindung gemäss Figur 2 ist der Nuckel R₁ querschnittlich vergrössert dargestellt, wobei zwischen der oberen Wand 8 und unteren Wand 9 jeweils Seitenwände 10.1, 10.2 gebildet sind.

Der äussere Querschnitt des Nuckelkörpers 1 ist vorzugsweise oval oder ovalartige ausgebildet.

Der innere Querschnitt des vorliegenden Nuckels R1 ist jedoch sechseckartig, wobei Eckbereiche 11 mit entsprechenden Radien versehen sind, um Verkäsungen, Verschmutzungen od. dgl. zu verhindern und ungleichzeitig ein homogenes Dehnen beim Zusammendrücken des Nuckelkörpers 1 zugewährleisten.

Im Rahmen der vorliegenden Erfindung soll jedoch auch liegen, dass der im Querschnitt 5 des Nuckelkörpers 1, wie er beispielsweise in dem Querschnitt gemäss Figur 6 angedeutet ist, von ovaler Art ist. In Figur 6 ist querschnittlich ein Nuckel R₂ aufgezeigt, der im wesentlichen der vorbeschriebenen Art entspricht. Lediglich ist der Innenquerschnitt 5 oval ausgebildet, wobei auch im Bereich der Seitenwände 10.1, 10.2 der Nuckelkörper querschnittlich eine Dicke D₁ aufweist, die gleich oder grösser ist als eine Dicke D₂ im Bereich der oberen Wand 8 und/oder unteren Wand 9.

Ferner können trapezartige, vieleckartige Querschnitte gebildet sein. Hierauf ist die Erfindung nicht beschränkt.

Durch die besondere Wahl des Querschnittes, wie er in den Figuren 2 und 6, beispielsweise bei den Nuckeln R₁ und R₂ angedeutet ist, sind beim Zusammendrücken der Nuckel, verursacht durch die Aufnahme des Nuckels im Maul eines Tieres, insbesondere in den seitlichen Bereichen der Seitenwände 10.1, 10.2 geringe Dehnungsverhalten im Material zu verzeichnen, so dass in den Bereichen der Seitenwände 10.1, 10.2 eine Rissbildung und Beschädigung des Nuckels minimiert ist und somit eine Lebensdauer oder Standzeit erhöht ist.

Dabei hat sich als vorteilhaft erwiesen, wie es auch in Figur 3 angedeutet ist, eine Dicke D₁ in Bereichen der Seitenwände 10.1, 10.2 zu wählen, die gleich oder grösser ist, als eine Dicke D₂ in den Bereichen der oberen Wand 8 und/oder unteren Wand 9. Dies soll ebenfalls im Rahmen der vorliegenden Erfindung liegen, unabhängig von der Wahl des inneren Querschnittes 5.

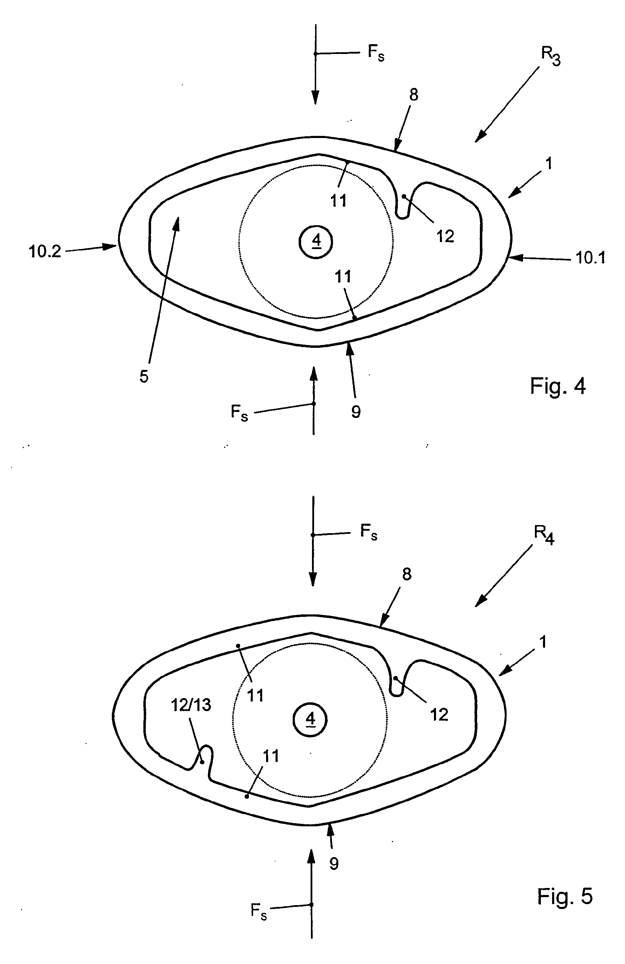

In einem weiteren Ausführungsbeispiel der vorliegenden Erfindung gemäss Figur 4 ist ein Nuckel R₃ aufgezeigt, welcher im Inneren, von einer Innenwand 11 abragend, zumindest einen Abstandhalter 12 aufweist, wobei der Abstandhalter 12 vorzugsweise gegen die gegenüberliegende Innenwand 11 ausgerichet ist.

Bevorzugt ist zumindest ein Abstandhalter 12 innen an der oberen Wand 8 und/oder unteren Wand 9 im Bereich der Innenwand 11 vorgesehen bzw. aus dem Nuckelkörper 1 selbst gebildet und beabstandet bei zu starkem Zusammendrücken des Nuckelkörpers 1 im Bereich oberer Wand 8 und unterer Wand 9 durch das Maul des Tieres, dass der Innenquerschnitt 8 derart zusammengedrückt wird, dass kein Nahrungsmittel mehr durch diesen durchströmen bzw. durchfliessen kann.

Bevorzugt ist der Abstandhalter 12 direkt aus dem Nuckelkörper 1 gebildet und erstreckt sich in Längsrichtung bzw. in Strömungsrichtung des Nuckels R₁, wie er beispielsweise in Figur 1.1 gestrichelt angedeutet ist. In diesem Fall ist der Abstandhalter 12 als Steg ausgebildet. Dieser kann jedoch auch, wie es in einem weiteren Ausführungsbeispiel der vorliegenden Erfindung gemäss Figur 5 bei einem Nuckel R₄ aufgezeigt ist, auch als Zapfenelement 13 ausgebildet sein, welches beispielsweise in einem mittleren Bereich, bezogen auf die Länge des Nuckels von der Innenwand 11 beabstandet ist.

Ferner ist auch denkbar, dass eine Mehrzahl von entsprechenden Abstandhaltern 12 bzw. Zapfenelementen 13 innen von der oberen Wand 8 und/oder von der unteren Wand 9 abragen, um bei zu starkem Zusammendrücken des Nuckelkörpers 1 ein Verschliessen bzw. ein Abquetschen zu verhindern und einen Durchlass von flüssigem Nahrungsmittel noch zu gewährleisten. Dies soll ebenfalls im Rahmen der vorliegenden Erfindung liegen.

### Bezugszeichenliste

| | | | | | |
|---|---|---|---|---|---|
| 1 | Nuckelkörper | 34 | | 67 | |
| 2 | Einlassöffnung | 35 | | 68 | |
| 3 | Aufnahme | 36 | | 69 | |
| 4 | Entnahmeöffnung | 37 | | 70 | |
| 5 | innerer Querschnitt | 38 | | 71 | |
| 6 | verstärkter Bereich | 39 | | 72 | |
| 7 | Knickbereich | 40 | | 73 | |
| 8 | obere Wand | 41 | | 74 | |
| 9 | untere Wand | 42 | | 75 | |
| 10 | Seitenwand | 43 | | 76 | |
| 11 | Innenwand | 44 | | 77 | |
| 12 | Abstandhalter | 45 | | 78 | |
| 13 | Zapfenelement | 46 | | 79 | |
| 14 | | 47 | | | |
| 15 | | 48 | | | |
| 16 | | 49 | | R₁ | Nuckel |
| 17 | | 50 | | R₂ | Nuckel |
| 18 | | 51 | | R₃ | Nuckel |
| 19 | | 52 | | R₄ | Nuckel |
| 20 | | 53 | | | |
| 21 | | 54 | | Fs | Saugkräfte |
| 22 | | 55 | | | |
| 23 | | 56 | | D₁ | Dicke |
| 24 | | 57 | | D₂ | Dicke |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Nuckel zum Entnehmen von flüssigem Nahrungsmittel für Tiere, insbesondere Kälber aus einem elastischen und hohl ausgebildeten länglichen Nuckelkörper (1) mit einer Einlassöffnung (2) und einer Entnahmeöffnung (4),
**dadurch gekennzeichnet,**
**dass** ein innerer Querschnitt des Nuckelkörpers (1) vieleckartig, trapezartig, sechseckartig oder oval ausgebildet ist.

2. Nuckel zum Entnehmen von flüssigem Nahrungsmittel für Tiere, insbesondere Kälber aus einem elastischen und hohl ausgebildeten länglichen Nuckelkörper (1) mit einer Einlassöffnung (2) und einer Entnahmeöffnung (4), **dadurch gekennzeichnet, dass** zumindest ein Bereich einer Seitenwand (10.1 und/oder 10.2) des Nuckelkörpers (1) querschnittlich gleich oder dicker ausgebildet ist, als ein Bereich der oberen und/oder unteren Wand (8, 9).

3. Nuckel zum Entnehmen von flüssigem Nahrungsmittel für Tiere, insbesondere Kälber aus einem elastischen und hohl ausgebildeten länglichen Nuckelkörper (1) mit einer Einlassöffnung (2) und einer Entnahmeöffnung (4), **dadurch gekennzeichnet, dass** zur Gewährleistung eines permanenten Durchflusses durch den Nuckelkörper (1), auch in zusammengedrücktem Zustand, innerhalb des Nuckelkörpers (1) zumindest ein Abstandhalter (12) vorgesehen ist.

4. Nuckel nach wenigstens einem der Ansprüche 1 bis 3, **dadurch gekennzeichnet, dass** innerhalb des Nuckelkörpers (1) zumindest ein Abstandhalter (12) angeordnet ist, der aus dem Nuckelkörper (1) selbst gebildet ist.

5. Nuckel nach Anspruch 4, **dadurch gekennzeichnet, dass** der zumindest eine Abstandhalter (12) als Zapfenelement (13) oder Stegelement, innen von der oberen und/oder unteren Wand (8, 9) nach innen abragt.

6. Nuckel nach Anspruch 4 oder 5, **dadurch gekennzeichnet, dass** der zumindest eine Abstandhalter (12) als Steg ausgebildet ist, der sich im wesentlichen in Längsrichtung bzw. in Strömungsrichtung des Nuckels (R) innen erstreckt.

7. Nuckel nach wenigstens einem der Ansprüche 4 bis 6, **dadurch gekennzeichnet, dass** der zumindest eine Abstandhalter (12) innen von der oberen und unteren Wand (8, 9) abragt und zwischen den Seitenwänden (10.1, 10.2) angeordnet und zur gegenüberliegenden unteren oder oberen Wand (8, 9) ausgerichtet ist.

8. Nuckel nach wenigstens einem der Ansprüche 1 bis 7, **dadurch gekennzeichnet, dass** der Abstandhalter (12) aus dem Nuckelkörper (1) selbst gebildet ist.

9. Nuckel nach wenigstens einem der Ansprüche 1 bis 8, **dadurch gekennzeichnet, dass** der zumindest eine Abstandhalter (12) beim Zusammendrücken des Nuckelkörpers (1), insbesondere beim Zusammendrücken von oberer Wand (8) gegenüber unterer Wand (9) innen einen Durchlass für flüssiges Nahrungsmittel ermöglicht.

10. Nuckel nach wenigstens einem der Ansprüche 1 bis 9, **dadurch gekennzeichnet, dass** zumindest eine Seitenwand (10.1, 10.2) einen Bereich aufweist, welche von einer Dicke (D₁) ist, welche gleich oder grösser ist als eine Dicke (D₂) einer oberen und/oder unteren Wand (8, 9) des Nuckelkörpers (1).

11. Nuckel nach wenigstens einem der Ansprüche 1 bis 10, **dadurch gekennzeichnet, dass** der innere Querschnitt (5) des Nuckelkörpers (1) sechseckartig ausgebildet ist, wobei die jeweiligen Eckbereiche mit Radien versehen sind, und mittig im Bereich der oberen und unteren Wand (8, 9) ein stumpfer Winkel gebildet ist.

12. Nuckel nach wenigstens einem der Ansprüche 1 bis 11, **dadurch gekennzeichnet, dass** der Nuckelkörper (1) querschnittlich innen oval ausgebildet ist, wobei die jeweiligen Seitenwände (10.1, 10.2) eine Dicke (D₁) aufweisen, die gleich oder grösser ist, als eine Dicke (D₂) einer oberen und/oder unteren Wand (8, 9).

13. Nuckel nach wenigstens einem der Ansprüche 1 bis 12, **dadurch gekennzeichnet, dass** der innere Querschnitt (5) des Nuckelkörpers (1) als flaches Sechseck, trapezartig ausgebildet ist, wobei die Bereiche der jeweiligen Seitenwände (10.1, 10.2) eine Dicke (D₁) aufweisen, die gleich oder grösser ist als eine Dicke (D₂) der dazwischenliegenden Bereiche der oberen und/oder unteren Wand (8, 9).

14. Nuckel nach wenigstens einem der Ansprüche 1 bis 13, **dadurch gekennzeichnet, dass** im Bereich einer Einlassöffnung (2) eine Aufnahme (3) gebildet ist, die querschnittlich rund ausgebildet ist und im Anschluss an die Aufnahme (3) die obere und/oder untere Wand (8, 9) sowie Seitenwand (10.1, 10.2) einen verstärkten Bereich (6) ausbilden, der in den sechseckartigen oder ovalen Querschnitt (5) übergeht.

15. Nuckel nach Anspruch 14, **dadurch gekennzeichnet, dass** der verstärkte Bereich (6) innerhalb und ausserhalb im Anschluss an die Aufnahme (3) und im Anschluss an die Entnahmeöffnung (4) zur Verlagerung eines Knickbereiches (7) entfernt von der Aufnahme vorgesehen ist.

16. Nuckel nach Anspruch 14 oder 15, **dadurch gekennzeichnet, dass** durch den verstärkten Bereich (6)einen Knickbereich (7) in etwa im ersten Viertel bis ersten Drittel des Nuckelkörpers (1), entfernt von der Aufnahme (3) verlagert oder gebildet ist.
